# EUROPÄISCHE PATENTSCHRIFT

(11) **EP 1 728 679 B1**
(45) Veröffentlichungstag und Bekanntmachung des Hinweises auf die Patenterteilung: **18.07.2007**
(21) Anmeldenummer: 05011713.4
(22) Anmeldetag: 31.05.2005
(51) Int. Cl.: B60P 3/03, B60P 3/14

(54) **Mobile Geschäftsstelle für ein Finanzinstitut**
Mobile business unit for a financial institute
Ensemble mobile d'affaires pour un institut financier

(43) Veröffentlichungstag der Anmeldung: 06.12.2006
(73) Patentinhaber: GS-Mobile GmbH, 50672 Köln (DE)
(72) Erfinder: Nieuwenhuis, Günter, 53919 Weilerswist (DE)
(74) Vertreter: Vorberg, Jens

(56) Entgegenhaltungen:
- EP-A- 1 265 201
- DE-B1- 1 755 482
- JP-A- 2002 096 676
- US-A- 5 726 430
- PATENT ABSTRACTS OF JAPAN Bd. 2000, Nr. 23, 10. Februar 2001 (2001-02-10) & JP 2001 155251 A (OGAKI KYORITSU BANK LTD), 8. Juni 2001 (2001-06-08)

## Beschreibung

Gegenstand der vorliegenden Erfindung ist eine mobile Geschäftsstelle für ein Finanzinstitut, welche ergänzend oder alternativ zu den bislang üblichen ortsgebundenen Geschäftsstellen, welche in ortsfesten Geschäftsräumen in Gebäuden untergebracht sind, zum Einsatz kommen können.

Mobile Geschäftsstellen für Finanzinstitute sind seit geraumer Zeit in der Diskussion, da sie Finanzinstituten trotz zunehmenden Kostendrucks erlauben könnten, ihr Dienstleistungsangebot in der Fläche zur Erhöhung ihrer Wettbewerbsfähigkeit zu verbessern. Erste Überlegungen zu mobilen Geschäftsstellen sind bereits aus den 60-iger Jahren bekannt. Beispielhaft sei hierfür die DE 1 755 482 A1 der Daimler Benz AG genannt, aus der eine mobile Geschäftsstelle für ein Finanzinstitut bekannt ist, welche an Bord eines Kleinbusses untergebracht ist. Die mobile Geschäftsstelle ist dabei im Wesentlichen als mobiler Schalterraum mit besonders gesichertem Fahrerbereich bzw. Kassenraum ausgebildet. Diese mobile Geschäftsstelle entspricht dem Stand der Bankentechnik der späten 60-iger Jahre und konnte sich vermutlich aufgrund ihrer eingeschränkten Nutzbarkeit nicht durchsetzen.

Neuere Ansätze für mobile Dienstleistungseinrichtungen von Finanzinstituten zielen eher in die Richtung des aus der US 5,726,430 bekannten mobilen Geldautomaten, der an Bord eines zweiachsigen Anhängers angeordnet ist. Der Geldausgabeautomat ist von außen zugänglich, eine Nutzung des Innenraums des zweiachsigen Anhängers beispielsweise für Beratungsdienstleistungen ist nicht vorgesehen. zweiachsigen Anhängers beispielsweise für Beratungsdienstleistungen ist nicht vorgesehen.

Aus dem stark erdbebengefährdeten Japan sind Entwicklungsanstrengungen für mobile Geschäftsstellen für Finanzinstitute bekannt, um im Erdbebenfall beschädigte oder zerstörte konventionelle Geschäftsstellen von Finanzinstituten kurzfristig durch mobile Geschäftsstellen ersetzen zu können. So offenbart beispielsweise die JP 2002-096676A eine mobile Geschäftsstelle, welche einen Wartebereich für Kunden und einen Beratungsbereich aufweist. Der Beratungsbereich und der Wartebereich sind in separaten, für sich alleine beweglichen Fahrzeugen untergebracht. Im Wartebereich für Kunden sind geeignete Sanitäreinrichtungen vorgesehen. Die aus dieser Offenlegungsschrift bekannte mobile Geschäftsstelle ist jedoch nicht zu kurzfristiger Verbringung von einem Einsatzort zum anderen geeignet.

Aus der JP 2001-155251A ist ebenfalls eine mobile Geschäftsstelle bekannt, wobei sich diese Schrift im Wesentlichen mit den Möglichkeiten der Anbindung der an Bord der mobilen Geschäftsstelle vorgesehenen Datenverarbeitungseinrichtungen an einen zentralen Bankrechner beschäftigt. Hier wird vorgeschlagen, die mobile Geschäftsstelle über zwei unabhängig voneinander arbeitende Kommunikationskanäle mit dem Bankrechner zu verbinden. Weiterhin wird vorgeschlagen, die mobile Geschäftsstelle mit zwei unabhängig voneinander arbeitenden Energieversorgungseinrichtungen zu versehen.

Aus dem Stand der Technik ist bislang keine mobile Geschäftsstelle bekannt, welche einen vollwertigen Ersatz für konventionelle Geschäftsstellen von Finanzinstituten darstellen könnte und die sich insbesondere dazu eignet, kurzfristig zu wechselnden Einsatzorten verbracht zu werden. Aufgabe der vorliegenden Erfindung ist es daher, eine mobile Geschäftsstelle anzugeben, die einen vollwertigen Ersatz für konventionelle Geschäftsstellen darstellt und die aufgrund ihrer Konzeption zur kurzfristigen Verbringung zwischen wechselnden Einsatzorten geeignet ist. Gelöst wird diese Aufgabe durch eine mobile Geschäftsstelle mit den Merkmalen des Hauptanspruchs.

Eine erfindungsgemäße mobile Geschäftsstelle für ein Finanzinstitut weist einen zumindest einachsigen Auflieger auf, der dazu vorgesehen ist, von einer Zugmaschine gezogen zu werden. Dabei ist der Innenraum des Aufliegers über einen Kundenzugang zugänglich. Weiterhin kann der Innenraum des Aufliegers über einen separaten Notausgang verlassen werden. Der Innenraum des Aufliegers ist weiterhin in zumindest drei voneinander abgeteilte Zonen unterteilt, nämlich in
i. eine Kassen-/Schalterzone, in der zumindest ein mit einem Bankingterminal ausgerüsteter Kassen-/Schalterarbeitsplatz für die Kundenbedienung ausgebildet ist,
ii. eine Sanitärzone, in der zumindest eine für Kunden und Mitarbeiter der Geschäftstelle zugängliche Toilette ausgebildet ist, und
iii. eine Kundenberatungszone, in der Sitzgelegenheiten für zwei Personen und eine Ablagefläche für Geschäftsunterlagen ausgebildet sind. Die Kundenberatungszone ist dabei mittels einer Barriere von der Kassen-/Schalterzone und/oder der Sanitärzone abgetrennt, die die Kundenberatungszone gegen unautorisierten Zutritt aus der Kassen-/Schalterzone und/oder aus der Sanitärzone sichert.

Die erfindungsgemäße mobile Geschäftsstelle weist den besonderen Vorteil auf, dass sie als vollwertiger Ersatz für eine konventionelle Geschäftsstelle, welche in normalen Geschäftsräumen untergebracht ist, darstellt. Sie ist einerseits mit allen Einrichtungen versehen, welche für einen ordnungsgemäßen Betrieb einer Geschäftsstelle eines Finanzinstituts erforderlich sind. Andererseits weist sie alle erforderlichen Einrichtungen auf, die es den Mitarbeitern des Finanzinstituts ermöglicht, einen ganzen Arbeitstag in der mobilen Geschäftstelle zu verbringen, ohne diese beispielsweise zu Pausenzeiten oder für den Besuch einer Toilette verlassen zu müssen. Dabei ist durch die besondere räumliche Ausgestaltung der mobilen Geschäftsstelle sichergestellt, dass die Mitarbeiter der mobilen Geschäftsstelle beispielsweise in Pausenzeiten nicht durch Kundenverkehr gestört werden.

Weiterhin erlaubt die Konzeption der mobilen Geschäftsstelle als Auflieger für eine Zugmaschine eine besonders kostengünstige Realisierung der mobilen Geschäftsstelle. So kann für das Zugfahrzeug auf eine große Zahl von Zugmaschinen verschiedenster Anbieter zurückgegriffen werden, die über keine besondere Ausrüstung verfügen müssen. Der Auflieger selbst kann bei geeignetem Aufbau sehr leicht ausgeführt werden, so dass es in der Regel möglich sein wird, nationale Vorschriften der Führerscheinklasse "PKW" zu erfüllen. Auf diese Weise können Mitarbeiter der mobilen Geschäftsstelle, welche über einen Führerschein für einen PKW verfügen, die mobile Geschäftsstelle von selbst ihrem nächtlichen Abstellort zu ihrem Einsatzort bewegen. Es entfällt somit die Notwendigkeit von weiterem Persönal für die Verbringung der erfindungsgemäßen mobilen Geschäftsstelle zu ihrem jeweiligen Einsatzort.

Im Zusammenhang mit der erfindungsgemäßen mobilen Geschäftsstelle soll unter einer "Kassen-/Schalterzone" ein räumlich abgetrennter Bereich verstanden werden, in dem sich gleichzeitig zumindest ein Mitarbeiter der mobilen Geschäftsstelle und ein Kunde aufhalten können. Dabei ist in der Kassen- / Schalterzone weiterhin eine Ablagefläche angeordnet, welche vorzugsweise sowohl für den Mitarbeiter als auch für den Kunden zugänglich ist, sowie ein Bankingterminal für einen Zugriff durch den Mitarbeiter der mobilen Geschäftsstelle. Unter einem Bankingterminal soll im Rahmen der vorliegenden Erfindung ein Datenverarbeitungsgerät für einen Mitarbeiter des Kreditinstituts verstanden werden, an welchem dieser typische Transaktionen vornehmen kann. Beispiele hierfür sind die Einnahme und Auszahlung von Bargeld, wobei letzteres bevorzugt unter Verwendung eines vom Bankingterminal angesteuerten automatischen Kassentresors (AKT) geschieht. Weitere Beispiele sind der Abruf von Kontoinformationen sowie die Pflege von Kundendaten. Weiterhin können in der Kassen- / Schalterzone Sitzgelegenheiten für den Mitarbeiter und/oder den Kunden vorgesehen sein.

Die erfindungsgemäße "Sanitärzone" ist dadurch gekennzeichnet, dass in ihr eine Toilette vorzugsweise mit einer Gelegenheit zum Händewaschen angeordnet ist.

In der erfindungsgemäßen Kundenberatungszone sind - wie erwähnt - Sitzgelegenheiten für zwei Personen und eine Ablagefläche für Geschäftsunterlagen ausgebildet. Die Kundenberatungszone ist dabei mittels einer Barriere von der Kassen-/ Schalterzone und/oder der Sanitärzone abgetrennt, die die Kundenberatungszone gegen unautorisierten Zutritt aus der Kassen-/Schalterzone und/oder aus der Sanitärzone sichert. Unter einer Barriere soll im Zusammenhang mit der vorliegenden Erfindung eine mechanische Absperrung zwischen der Kundenberatungszone und den angrenzenden Zonen verstanden werden, die einen direkten Übergang zwischen den angrenzenden Zonen verhindert sowie eine ausreichende Geräuschdämmung zwischen den angrenzenden Zonen realisiert. In der Barriere wird in der Regel eine verschließbare Türe vorgesehen sein, die einen Übergang von der einen Zone in die andere ermöglicht. Die Kundenberatungszone ist somit optimal geeignet, um vertrauliche Beratungsgespräche mit einem Kunden zu führen.

Besondere Vorteile ergeben sich, wenn die Barriere zumindest teilweise transparent ausgeführt ist, so dass ein Mitarbeiter, der sich z.B. im Rahmen eines Kundengesprächs in der Kundenberatungszone aufhält, die Kassen- / Schalterzone unter ständiger Beobachtung halten kann.

Weiterhin kann die Kundenberatungszone mit gängigen Einrichtungen der Bürokommunikation wie einem Drucker, einem Faxgerät sowie einem Netzwerkanschluss für ein internes LAN der mobilen Geschäftsstelle ausgestattet sein.

In einer besonders bevorzugten Weiterbildung ist in der Kundenberatungszone weiterhin eine Videokonferenzanlage ausgestattet, welche z.B. eine Kamera und eine z.B. als großformatigem Plasma- oder LCD-Bildschirm ausgebildete Anzeigeeinheit umfasst. Diese Videokonferenzanlage erlaubt beispielsweise die Führung von Konferenzen mit sich entfernt aufhaltenden Entscheidungsträgern des Kreditinstituts.

In einer weiteren vorteilhaften Weiterbildung ist in der Kundenberatungszone ein Küchenbereich ausgebildet, der zumindest eine Kühlvorrichtung zur gekühlten Unterbringung von Lebensmitteln oder eine Vorrichtung zur Erwärmung von Lebensmitteln, beispielsweise ein Mikrowellengerät oder eine Gaskochgelegenheit, vorgesehen. Weiterhin kann eine Möglichkeit zur Reinigung von schmutzigem Geschirr vorgesehen sein, insbesondere ein mit fließendem Wasser ausgestattetes Spülbecken oder eine Spülmaschine.

Die in der Kundenberatungszone vorgesehenen Sitzgelegenheiten für zumindest zwei Personen sowie die Ablagefläche können während z.B. eventueller Pausenzeiten von den Mitarbeitern der mobilen Geschäftstelle ohne weiteres als Sozialbereich verwendet werden, in der die Mitarbeiter beispielsweise ihre Mahlzeiten einnehmen können.

In einer vorteilhaften Weiterbildung der erfindungsgemäßen Geschäftsstelle ist die Geschäftsstelle weiterhin mit einem Kommunikationsmittel ausgestattet, das die Herstellung einer birektionalen satellitengestützten Datenkommunikation mit einem entfernten Rechner erlaubt. Hierbei kann es sich beispielsweise um eine Satellitensende- und Empfangseinheit zur Kommunikation mit einen geostationären Satelliten handeln, über welche ein dauerhafter Zugang mit hoher Datenrate (bevorzugt sind zumindest 128 kbit/sek.) zum Internet oder sonstigen öffentlichen Daten- und Sprachkommunikationsnetzen hergestellt werden kann.

In einer vorteilhaften Weiterbildung umfasst die mobile Geschäftsstelle weiterhin einen Geldausgabeautomaten an sich bekannter Bauart, welcher von einer Vielzahl verschiedener Anbieter erhältlich ist und individuell an die Bedürfnisse eines Finanzinstituts anpassbar ist. Der Geldausgabeautomat ist dabei so in oder an der mobilen Geschäftsstelle angeordnet, dass er für einen Kundenzugriff zugänglich ist.

Weitere Vorteile können realisiert werden, wenn die mobile Geschäftsstelle weiterhin einen automatischen Kassentresor zur automatisierten Ausgabe von Bargeld aufweist, welcher vorzugsweise durch das in der Kassen-/Schalterzone angeordnete Bankingterminal gesteuert wird. Indem ein automatischer Kassentresor in der mobilen Geschäftsstelle vorgesehen wird, ist es möglich, auf einen separaten Kassenbereich zu verzichten, welcher mit einer ausreichend starken Sicherung zu versehen wäre, wie beispielsweise der DE 1 755 482 entnommen werden kann. Auf diese Weise kann das Gesamtgewicht des Aufliegers deutlich verringert werden. Weiterhin vermindert der automatische Kassentresor die Wahrscheinlichkeit eines erfolgreichen Überfalls auf die mobile Geschäftsstelle erheblich.

In einer vorteilhaften Weiterbildung umfasst die mobile Geschäftsstelle weiterhin Überwachungsmittel, die zur Feststellung eines unautorisierten Zugriffs auf den Innenraum des Aufliegers ausgebildet sind. So können die Überwachungsmittel beispielsweise eine Öffnung des Kundenzugangs oder des separaten Notausgangs erfassen oder eine Beschädigung der im Auflieger vorgesehenen Fenster. Weiterhin können Bewegungsmelder vorgesehen werden, welche Bewegungen beispielsweise im Innenraum des Aufliegers erfassen. Schließlich können die Überwachungsmittel weiterhin dazu ausgebildet sein, Manipulationen an der Kupplung mit dem Zugfahrzeug, Manipulationen an einer evtl. am Auflieger vorgesehenen Feststellbremse der zumindest einen Achse des Aufliegers oder Manipulationen an einer evtl. vorgesehenen Wegfahrsperre des Zugfahrzeuges zu erfassen. Schließlich können die Überwachungsmittel so ausgebildet sein, dass sie permanent die aktuelle Position zumindest des Aufliegers erfassen und über einen geeigneten Datenkanal an einen entfernten Empfänger übermitteln können.

Weiterhin weist die mobile Geschäftsstelle bevorzugt eine Telefonanlage auf, die zumindest für externe Telefonate, vorzugsweise jedoch auch für interne Telefonate zwischen verschiedenen Arbeitsplätzen eingerichtet ist.

Besondere Vorteile ergeben sich, wenn zumindest eine der folgenden Vorrichtungen über das Kommunikationsmittel in Datenkommunikation mit einem entfernten Rechner steht:
a. das Bankingterminal,
b. der Geldausgabeautomat,
c. der automatische Kassentresor,
d. die Überwachungsmittel,
e. die Telefonanlage, oder
f. die Videokonferenzanlage

In allen Fällen können die Kommunikationsmittel dazu ausgebildet sein, einen Zugang zum Internet oder sonstigen öffentlichen Daten- und Sprachkommunikationsnetzen mit ausreichender Datenrate zur Verfügung zu stellen. Über diesen Kommunikationszugang können dann beispielsweise das Bankingterminal, der Geldausgabeautomat und der automatische Kassentresor beispielsweise über einen geschützten Kanal mit einem zentralen Bankrechner verbunden sein. Die Telefonanlage kann dazu eingerichtet sein, eine Telekommunikation über das Internet (Voice-over-IP, Fax-over-IP etc.) auszuführen. Hierzu ist z.B. ein Internetzugang mit ausreichender (bidirektionaler) Übertragungsrate ausreichend. Schließlich können die Überwachungsmittel mit einem entfernten Überwachungsrechner beispielsweise bei einem externen Sicherheitsdienst verbunden sein, wobei auch diese Anbindung über einen geschützten Kanal im Internet realisiert werden kann.

Besondere Vorteile ergeben sich bezüglich des in der mobilen Geschäftsstelle vorgesehen Geldausgabeautomaten, wenn dieser von außen zugänglich am Auflieger angeordnet wird und auf Straßenniveau absenkbar auf dem Auflieger gelagert ist. Eine solche Anordnung des Geldausgabeautomaten erlaubt es einerseits, auf einfachste Weise einen behindertengerechten Zugang zum Geldausgabeautomaten zu realisieren, da der auf Straßenniveau angeordnete Geldausgabeautomat beispielsweise auch für einen im Rollstuhl befindlichen Menschen ohne weiteres zugänglich ist. Darüber hinaus stellt der auf Straßenniveau abgesenkte Geldausgabeautomat eine hervorragende Wegfahrsperre dar, da er aufgrund der erforderlichen Sicherung der im Geldausgabeautomat gelagerten Bargeldbestände mit einer starken Panzerung versehen ist und somit naturgemäß ein hohes Gewicht aufweist. Dieses hohe Gewicht, welches typischerweise 500 kg und mehr beträgt, stellt im auf Straßenniveau abgesenkten Zustand einen nahezu perfekte mechanische Wegfahrsperre dar.

Wie bereits ausgeführt wurde, ergeben sich besondere Vorteile beim praktischen Einsatz der mobilen Geschäftsstelle, wenn der einsatzbereit ausgerüstete Auflieger der mobilen Geschäftsstelle ein möglichst geringes Gesamtgewicht aufweist. Ein solches geringes Gesamtgewicht kann beispielsweise realisiert werden, indem der Aufbau des Aufliegers in Sandwichbauweise, vorzugsweise in Kunststoff-Sandwichbauweise ausgeführt ist. In diesem Fall kann der Auflieger beispielsweise aus einem leichtgewichtigen Unterbau mit Fahrwerk aus einer Serienproduktion bestehen, auf dem ein in Sandwichbauweise aufgebauter Aufbau angeordnet ist, welcher den Innenraum der erfindungsgemäßen mobilen Geschäftsstelle ausbildet.

Weitere Vorteile und Merkmale der erfindungsgemäßen mobilen Geschäftsstelle ergeben sich aus den Unteransprüchen sowie dem nachfolgenden Ausführungsbeispiel, welches beispielhaft und nicht einschränkend zu verstehen ist und anhand der Zeichnung näher erläutert wird. In dieser zeigen:
- Figur 1:: eine schematische Darstellung einer erfindungsgemäßen mobilen Geschäftsstelle in Seitenansicht,
- Figur 2:: eine schematische Darstellung des Aufliegers der mobilen Geschäftsstelle aus Figur 1 in betriebsbereitem Zustand,
- Figur 3:: ein Schnitt durch den Auflieger einer mobilen Geschäftsstelle in Aufsicht in betriebsbereitem Zustand,
- Figur 4:: eine vergrößerte Ansicht der Kundenberatungszone des Aufliegers aus Figur 3,
- Figur 5:: eine vergrößerte Ansicht der Kassen-/Schalterzone des Aufliegers der mobilen Geschäftsstelle aus Figur 3,
- Figur 6:: eine vergrößerte Ansicht der Sanitärzone des Aufliegers der mobilen Geschäftsstelle aus Figur 3 und
- Figur 7:: eine schematische Darstellung des Kommunikationsmittels der erfindungsgemäßen mobilen Geschäftsstelle.

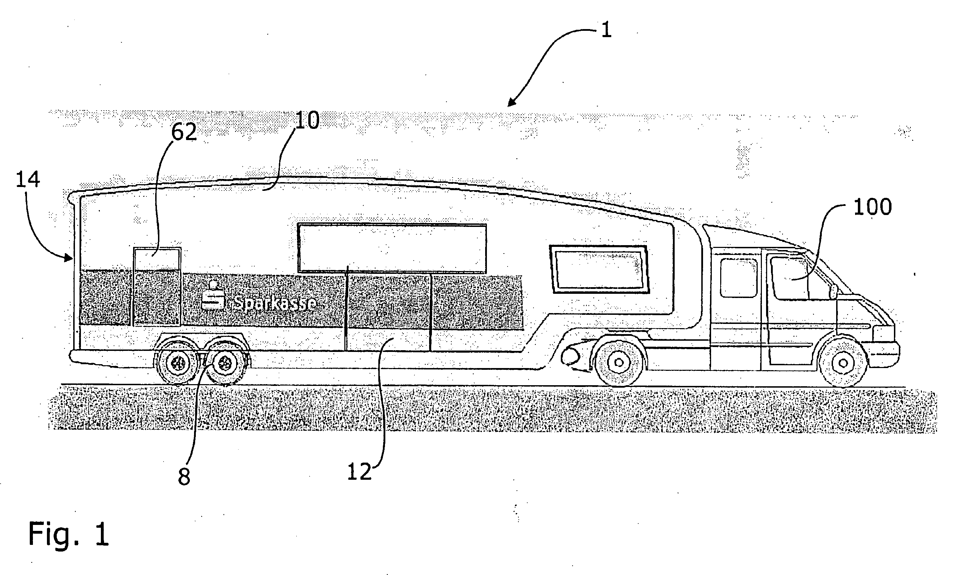

Figur 1 zeigt schematisch eine erfindungsgemäße Geschäftsstelle 1 mit einer Zugmaschine 100, die einen zweiachsigen Auflieger 10 zieht. Die Zugmaschine 100 kann z.B. dem Standardlieferprogramm eines Nutzfahrzeugherstellers wie der Daimler Benz AG oder der Volkswagen AG entstammen. Der Auflieger 10 weist eine gebremste Doppelachse 8 auf, die vorzugsweise als höhenverstellbare luftgefederte Doppelachse ausgeführt ist. Insbesondere kann die Doppelachse 8 so ausgebildet sein, dass ein Absenken des gesamten Aufliegers 10 möglich ist.

Der Auflieger 10 besteht aus einer (nicht gezeigten) tragenden Rahmenkonstruktion, die auf die Doppelachse 8 aufgesetzt ist. Die Rahmenkonstruktion trägt ihrerseits einen in Kunststoff-Sandwichbauweise aufgebauten Aufbau. Im Rahmen dieser Sandwichbauweise werden eine Kunststoff-Außenschale und eine Kunststoff-Innenschale durch Ausschäumen des Zwischenraums mit einem Kunststoffschaum unlösbar miteinander verbunden. Die Sandwichbauweise vereint hohe Stabilität mit geringem Gewicht und weist darüber hinaus ein sehr gutes thermisches Isolationsverhalten auf. Weiterhin ist eine weitgehend freie Formgebung des Aufbaus möglich.

Der Auflieger 10 weist einen seitlich angeordneten Kundenzugang 12 sowie einen an seinem hinteren Ende angeordneten Notausgang 14 auf.

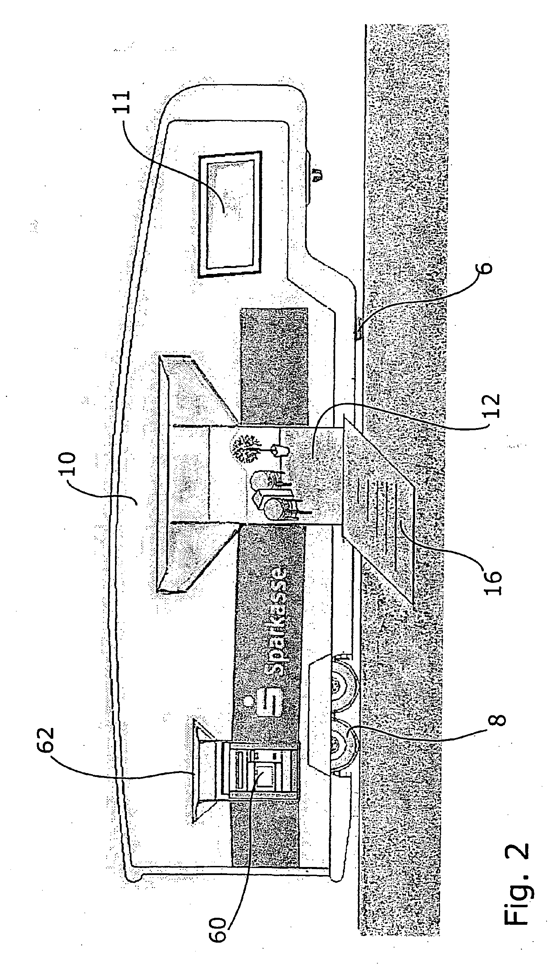

Figur 2 zeigt nun den Auflieger 10 der aus Figur 1 ersichtlichen mobilen Geschäftsstellen in betriebsbereitem Zustand, wobei die Zugmaschine 100 abgekoppelt wurde, so dass sich der Auflieger 10 nunmehr auf der Doppelachse 8 und einer Stütze 6 abstützt. Dabei ist der Auflieger 10 in seiner Gesamtheit in der Höhe abgesenkt durch Betätigung der absenkbaren Doppelachse 8.

Die Geschäftsstelle 1 ist weiterhin in dem betriebsbereiten Zustand versetzt durch Öffnen des Kundenzugangs 12, welcher einen direkten Zugang zu der im Inneren des Aufliegers 10 ausgebildeten Kassen-/Schalterzone 20 ermöglicht. Optional ist eine Rampe 16 oder ein Lift (nicht gezeigt) vorgesehen, um auch behinderten Kunden einen Zugang zur Geschäftsstelle 1 zu ermöglichen. Der Kundenzugang wird durch eine doppelflügelige Glasschiebetüre 13 verschlossen, welche sich von Näherungsmeldern gesteuert automatisch öffnet und schließt.

Weiterhin ist am Auflieger 10 ein Geldausgabeautomat 60 angeordnet, der bei einer Verbringung der mobilen Geschäftsstelle 1 von einem Einsatzort zum anderen mittels einer Sicherungstür 62 gegen Zugriffe von außen gesichert wird (siehe Figur 1). Im betriebsbereiten Zustand der mobilen Geschäftsstelle 1 ist diese Sicherungstür 62 geöffnet, so dass ein ungehinderter Zugang zu den Bedienelementen des Geldausgabeautomaten 60 möglich ist. In der gezeigten Ausführungsform ist der Geldausgabeautomat 60 im Bereich der Doppelachse 8 angeordnet. Dies stellt ein weiteres Merkmal der erfindungsgemäßen mobilen Geschäftsstelle 1 dar, nämlich dass die schwergewichtigen technischen Einrichtungen der mobilen Geschäftsstelle 1 im Bereich der Doppelachse 8 angeordnet sind, d. h. im hinteren Drittel des Aufliegers 10.

Um auch körperlich behinderten Menschen eine Bedienung des gezeigten Ausführungsbeispiel relativ hoch angeordneten Geldausgabeautomaten 60 zu ermöglichen, sind hier die Eingabeelemente sowie eine Anzeigeeinheit des Geldausgabeautomaten 60 in der Höhe variabel ausgeführt, so dass die Anzeigeeinheit und die Eingabeelemente auf Kundenanforderung abgesenkt werden können. Auf diese Weise wird eine einfache Bedienung des Geldausgabeautomaten 60 auch für einen beispielsweise im Rollstuhl sitzenden Menschen ohne weiteres möglich.

Alternativ kann der Geldausgabeautomat 60 auch so in den Boden des Aufliegers 10 versenkt werden, dass sich die Unterseite des Geldausgabeautomaten 60 nur noch einige zehn Zentimeter über dem Straßenniveau befindet. Der Boden des Aufliegers liegt dabei in der Regel auf den typischerweise vorhandenen Tragholmen des Rahmens des Aufliegers 10 auf, so dass die Tragholme ggf. im Bereich des Geldausgabeautomaten 60 einen veränderten Abstand aufweisen müssen, um eine ausreichend bemessene Ausnehmung für den Geldausgabeautomaten 60 auszubilden. Der Geldausgabeautomat 60 wird bei dieser Anordnung vorteilhaft unterseitig durch eine Wanne vor Spritzwasser und mechanischen Einwirkungen geschützt.

In beiden Ausführungen ist die Sicherungstüre 62 so ausgeführt, dass sie im geöffneten Zustand ein sich über den Bedienelementen des Geldausgabeautomaten 60 erstreckendes Vordach ausbildet.

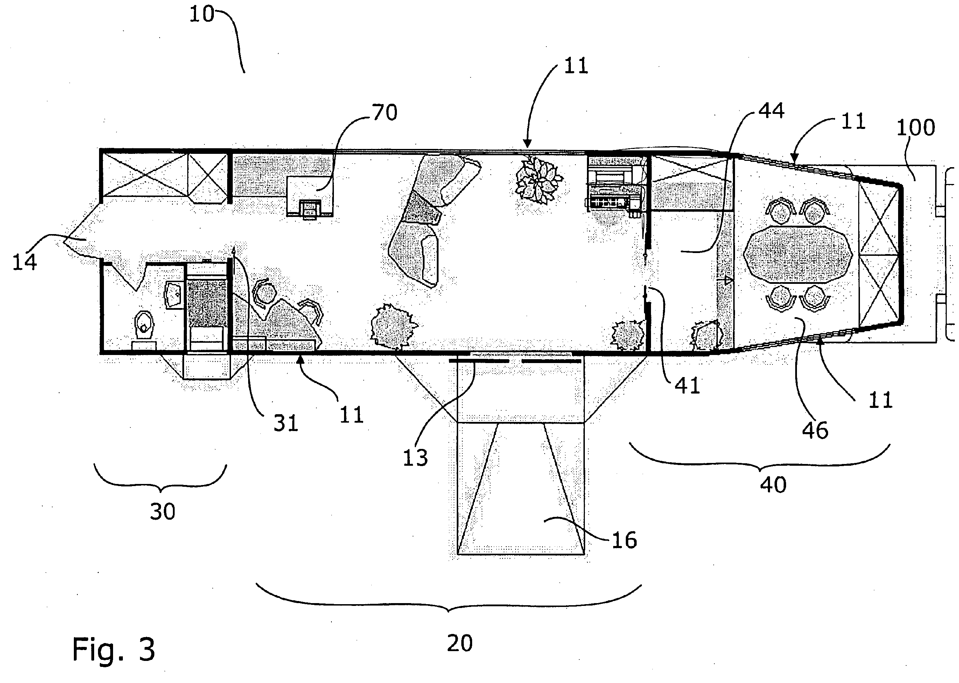

Figur 3 zeigt nunmehr einen Schnitt durch den Auflieger 10 der erfindungsgemäßen mobilen Geschäftsstelle 1 der Figuren 1 und 2 in Aufsicht. Deutlich zu erkennen ist die Dreiteilung des Innenraums des Aufliegers 10 in drei durch Glastüren 31, 41 voneinander getrennte Zonen, nämlich eine zentral angeordnete Kassen-/Schalterzone 20, eine im vorderen Bereich angeordnete Kundenberatungszone 40 und eine im hinterem Bereich des Aufliegers 10 ausgebildete Sanitärzone 30.

Die Sanitärzone 30 ist von der Kassen-/Schalterzone 20 durch eine verschließbare Glastür 31 abgetrennt.

Der Kundenzugang 12 ist mit einer ersten Glasschiebetüre 13 versehen. Diese schließt automatisch und öffnet auf Anforderung, wobei die Öffnungssteuerung vorzugsweise über Näherungsmelder realisiert wird, die eine Annäherung eines Kunden oder eines Mitarbeiters an ein Betätigungselement der ersten Glasschiebetüre 13 erfassen.

Die Kundenberatungszone 40 ist über eine Glastrennwand von der Kassen-/Schalterzone 20 abgeteilt, in der ein mit einer zweiten Glasschiebetüre 41 verschlossener Durchgang vorgesehen ist. Die Glastrennwand mit der zweiten Glasschiebetüre 41 stellt dabei die erfindungsgemäße Barriere 400 dar. Die zweite Glasschiebetüre 41 wird für ein Verlassen der Kundenberatungszone 40 ebenfalls mittels kurzreichweitigen Näherungsmeldern automatisch geöffnet, so dass sich die zweite Schiebetüre 41 automatisch bei entsprechender Annäherung eines Kunden oder Mitarbeiters aus der Kundenberatungszone 40 an ein Bedienelement der zweiten Glasschiebetüre 41 öffnet.

Von der Kassen-/Schalterzone 20 aus hingegen öffnet die Glasschiebetüre nur bei (manueller) Betätigung einer Zugangskontrolleinrichtung. Eine solche Zugangskontrolleinrichtung kann beispielsweise aus einer Eingabeeinheit für einen Zutrittscode, einem manuell betätigbaren Schloss oder einem Identifikationskartenleser bestehen. Die zweite Glasschiebetüre 41 sichert somit die Kundenberatungszone 40 gegen einen unautorisierten Zugang aus der Kassen- / Schalterzone 20 ab.

Deutlich sichtbar ist, dass die Kassen- / Schalterzone 20 über einen seitlich angeordneten Kundenzugang 12, der hier mit einer Rampe 16 ausgerüstet ist, betreten und verlassen werden kann.

Die mobile Geschäftsstelle kann ebenfalls über den im Bereich der Sanitärzone 30 angeordneten Notausgang 14 verlassen werden, wobei sich die hier vorgesehene Fluchttür im Notfall von jedermann von Innen öffnen lässt. Die Fluchttür ist hierzu mit einer für Fluchttüren üblichen Sicherungsvorrichtung gegen unbefugte Benutzung gesichert, z.B. einer zu zerstörenden Abdeckung einer Türklinke. Weiterhin die Fluchttür des Notausgangs 14 gegen unbefugte Öffnung von dem in der Folge noch genauer beschriebenen Überwachungsmittel 80 erfasst werden.

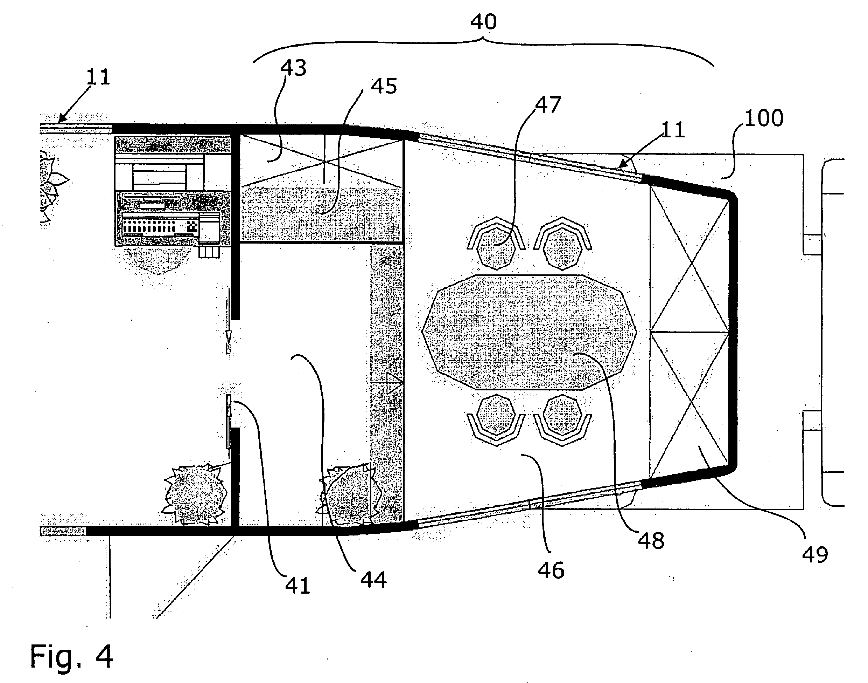

Figur 4 zeigt nun die Kundenberatungszone 40 des aus Figur 3 ersichtlichen Aufliegers 10 in vergrößerter Darstellung. Der Zugang zur Kundenberatungszone 40 von der Kassen- / Schalterzone 20 aus wird wie bereits beschrieben durch eine zweite Glasschiebetür 41 gesteuert und begrenzt. Betritt man die Kundenberatungszone 40 durch die zweite Glasschiebetür 41, so gelangt man in einen Küchenbereich 44, der über eine Stufe von einem Konferenzbereich 46 abgeteilt ist.

Im Küchenbereich 44 ist eine Küchenzeile vorgesehen, die unter anderem eine Kühlvorrichtung 43 zur gekühlten Lagerung von Lebensmitteln, insbesondere einen Kühlschrank 43, sowie eine Spüle 45 umfasst, welche mit fließend warmem und kaltem Wasser ausgerüstet ist. Weiterhin ist in der Küchenzeile eine (nicht dargestellte) Gaskochgelegenheit vorgesehen. Vorzugsweise ist die Kühlvorrichtung 43 gasbetrieben, um das bordeigene Stromnetz nicht übermäßig zu belasten.

Der Konferenzbereich 46, welcher durch eine Stufe vom Küchenbereich 44 abgeteilt ist, weist beidseitig große Fenster 11 auf, die die gesamte Kundenberatungszone 40 mit Tageslicht versorgen. Im gezeigten Ausführungsbeispiel ist der Konferenzbereich 46 gleichzeitig als Ruhebereich ausgebildet, in dem eine als Tisch ausgebildete Ablagefläche 48 für vier Personen sowie eine entsprechende Anzahl von Sitzgelegenheiten 47, nämlich Stühlen, vorgesehen sind.

Im vordersten Bereich des Aufliegers 10 sind hier nicht näher dargestellte Ablagefächer 49 zur Ablage von Geschäftsunterlagen sowie Aktenschränke vorgesehen, in denen zusätzlich Stellflächen für Bürokommunikationseinrichtungen wie Drucker, Faxgeräte und sonstige Telekommunikationseinrichtungen vorgesehen sind. Weiterhin ist der Konferenzbereich 46 mit Anschlüssen für ein internes LAN der mobilen Geschäftsstelle ausgerüstet.

An der frontseitigen Stirnwand des Kundenberatungsbereichs 30 ist ein Plasmabildschirm als Anzeigeeinheit für eine bordeigene Videokonferenzanlage angeordnet.

Der Konferenzbereich 46 stellt hier gleichzeitig den erfindungsgemäßen Ruhebereich (42) dar, in dem sich die Mitarbeiter der mobilen Geschäftsstelle während ihrer Pausenzeit beispielsweise zur Einnahme von Mahlzeiten zurückziehen können.

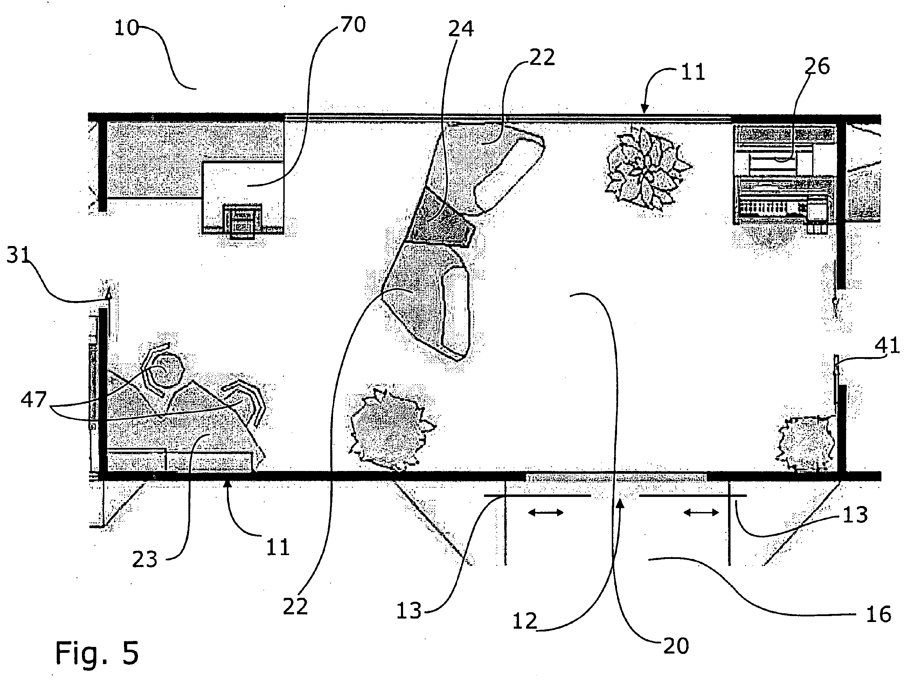

Figur 5 zeigt nun eine vergrößerte Ansicht der Kassen-/Schalterzone 20 der erfindungsgemäßen mobilen Geschäftsstelle aus Figur 3. Betritt man die Kassen-/Schalterzone 20 über den Kundenzugang 12, so gelangt man in einen zentralen Kundenbereich, in dem sich zwei als Schalter ausgebildete Beratungsplätze 22 befinden, an denen Kunden gleichzeitig von Mitarbeitern der mobilen Geschäftsstelle bedient werden können. Die Beratungsplätze 22 sind dabei so angeordnet, dass zumindest ein zentral angeordnetes Bankingterminal 24 vorgesehen ist, welches für Mitarbeiter der mobilen Geschäftsstelle von beiden Arbeitsplätzen der Beratungsplätze 22 zugänglich ist.

Weiterhin ist in dem zentralen Kundenbereich ein Kundenterminal 26 angeordnet, welches die Ausführung typischer Bankgeschäfte wie das Ausführen von Überweisungen sowie das Abholen von Kontoauszügen durch Kunden des Finanzinstituts erlaubt.

Dem allgemeinen Kundenzutritt durch Raumteiler wie größere Pflanzen etwas entzogen ist in der Kassen-/Schalterzone 20 ein Mitarbeiterbereich ausgebildet, in dem sich die an den Beratungsplätzen 22 tätigen Mitarbeiter aufhalten. Darüber hinaus ist ein weiterer Arbeitsplatz 23 mit eigenem Schreibtisch und vorzugsweise eigenem Bankingterminal 24 ausgebildet, wobei diese Arbeitsplatz eine ersetzende Tätigkeit eines weiteren Mitarbeiters der mobilen Tätigkeit inklusive der Durchführung von Kundengesprächen erlaubt. Hierzu ist der Arbeitsplatz 23 mit zwei Stühlen 47 ausgerüstet. Weiterhin ist im Mitarbeiterbereich ein automatischer Kassentresor AKT 70 angeordnet, welcher direkt oder indirekt von dem zumindest einem Bankingterminal 24 der Beratungsplätze 22 angesteuert wird. Der Kassentresor 70 dient zur kontrollierten Ausgabe von größeren Geldbeträgen auf Mitarbeiteranforderung hin.

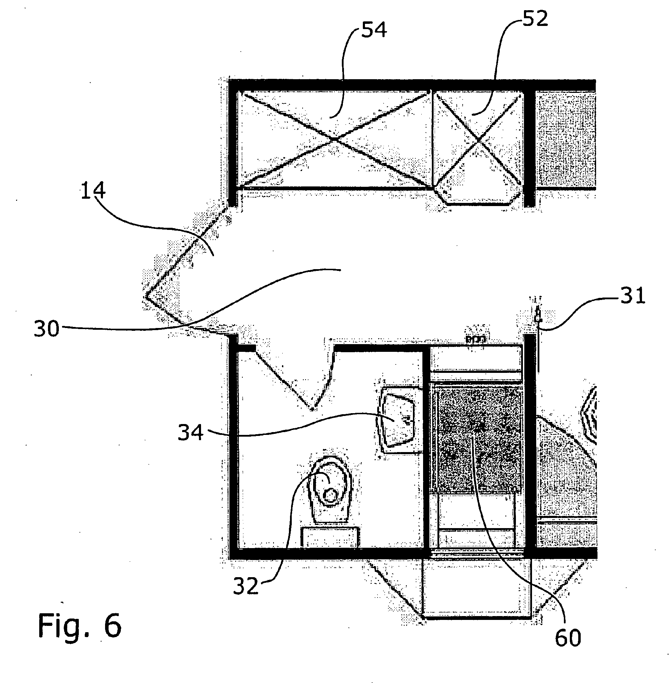

Figur 6 zeigt nun vergrößert die Sanitärzone 30 der erfindungsgemäßen mobilen Geschäftsstelle 1 gemäß Figur 3, die wie bereits erwähnt über eine Glastür 31 von der Kassen-/Schalterzone 20 abgetrennt ist. In der Sanitärzone 30 ist eine Toilette 32 vorgesehen, die in einem separaten, durch eine verschließbare Türe abtrennbaren Raum untergebracht ist. In diesem Raum ist darüber hinaus ein Handwaschbecken 34 vorgesehen.

Weiterhin bietet die Sanitärzone 30 Platz für einen Serverschrank 52, in dem ein zentraler Server der mobilen Geschäftsstelle nebst zugehöriger Netzwerkeinrichtung untergebracht werden kann. Weiterhin findet in dem Serverschrank 52 eine Telefonanlage (19) sowie die zentrale Steuerung der Überwachungsmittel 80 ihren Platz. Weiterhin können im Serverschrank 52 die Kommunikationsmittel 50, welche nachstehend noch genauer beschrieben werden, sowie eine zentrale Steuerungseinheit des Videokonferenzsystems untergebracht werden. Der Serverschrank 52 ist dabei gegen einen unautorisierten Zugriff beispielsweise durch Kunden aber auch durch Mitarbeiter gesichert, beispielsweise unter Verwendung einer verstärkten Zugangstür, deren Öffnung vom Überwachungsmittel 80 überwacht wird.

Weiterhin ist in der Sanitärzone 30 ein verschließbarer Technikschrank54 angeordnet, welcher ebenfalls gegen einen unautorisierten Zugriff aus der Sanitärzone 30 gesichert ist. Der Technikschrank 54 kann eine verschließbare Zugangstür aufweisen, welche einen Zugang zum Technikschrank 54 von außerhalb der mobilen Geschäftsstelle 1 erlaubt. Eine solche Zugangstür ist vorliegend jedoch nicht dargestellt. Der Technikschrank 54 kann beispielsweise technische Einrichtung der mobilen Geschäftsstelle wie eine Klimaanlage und/oder eine Generatoreinheit für das elektrische Bordnetz beherbergen. Besondere Vorteile ergeben sich, wenn zur Klimatisierung der mobilen Geschäftstelle 10 eine solarbetriebene thermochemische Klimaanlage verwendet wird, die auf dem Prinzip der thermochemischen Wärmespeicherung / -abgabe bei einer exothermen Reaktion basiert.

Weiterhin ist aus Figur 6 ersichtlich, dass in der Sanitärzone 30 ein Notausgang 14 angeordnet ist, über den das Innere der mobilen Geschäftsstelle 1 im Notfall verlassen werden kann.

Schließlich ist in der Sanitärzone 30 der Geldausgabeautomat 60 angeordnet, wobei dieser jedoch aus der Sanitärzone 30 selbst nicht zugänglich ist. Vielmehr ist der Geldausgabeautomat 60 zumindest für Kunden der mobilen Geschäftsstelle nur von außen zugänglich, wie dies bereits vorstehend genauer beschrieben wurde.

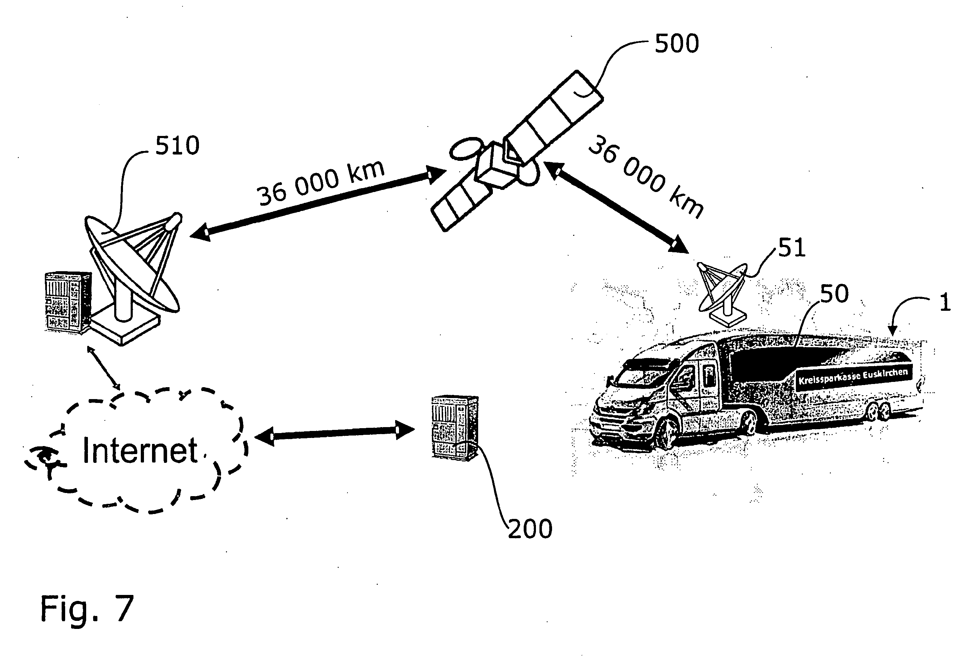

Figur 7 zeigt schließlich die an Bord der mobilen Geschäftsstelle 1 vorgesehenen Kommunikationsmittel 50, mit denen eine Datenkommunikation mit einem entfernten Rechner 200 hergestellt werden kann. Teil der Kommunikationsmittel 50 ist eine Satellitenkommunikationseinheit 51, welche zur Herstellung einer sattelitengestützten Verbindung zu einem Satellitenhub 510 dient. Hier kommt bevorzugt eine selbstausrichtende Satellitenanlage zum Einsatz, bei der die Ausrichtung der Satellitenantenne automatisiert ohne einen Benutzereingriff erfolgt. Die Kommunikation mit dem Satellitenhub 510 erfolgt über einen geostationären Satelliten 500. Der Satellitenhub 510 stellt nun seinerseits eine Verbindung zum Internet her, mit welchem der entfernte Rechner 200 verbunden ist. Die Internetverbindung zwischen dem Satellitenhub 510 und dem Rechner 200 kann dabei über einen gesicherten Kanal (beispielsweise über ein VPN "Virtual Private Network" oder einen SSH Zugang) erfolgen. Das dargestellte satellitengestützte Kommunikationsmittel 50 erlaubt bereits zum heutigen Tage die Herstellung einer Datenkommunikation mit einem externen Rechner 200, welche Datenübertragungsraten von 128 kbit/s und mehr erlaubt. Entsprechende Datenübertragungsraten sind ausreichend, um das zumindest eine Bankingterminal 24 und den Geldausgabeautomaten 60 mit einem entfernten Zentralenbankrechner 200 sowie die Überwachungsmittel 80 mit einem Server eines privaten Sicherheitsdienstes zu verbinden.

Die Verwendung eines Kommunikationsmittels 50, welches auf der Herstellung eines satellitengestützten Datenkanals zwischen der mobilen Geschäftsstelle und einem entfernten Rechner 200 basiert, stellt ein mögliches Kommunikationsmittel dar, welches zum heutigen Tag bereits verfügbar ist und welches es weitgehend unabhängig vom Standort der mobilen Geschäftsstelle erlaubt, ausreichend hohe Datenübertragungsraten zu realisieren. Zukünftig werden auch andere Kommunikationsmittel 50 verfügbar sein, so beispielsweise das in Deutschland im Aufbau befindliche UMTS Netz oder die zunehmend verfügbaren öffentlichen W-LANs mit Hochgeschwindigkeitsanbindung an das öffentliche Internet. Das Kommunikationsmittel 50 kann aber auch bei örtlichem Vorliegen geeigneter Voraussetzungen mittels konventioneller drahtgebundener Netzwerkverbindungen beispielsweise mit dem öffentlichen Internet realisiert werden.

Stellt das Kommunikationsmittel 50 keine ausreichende Bandbreite zur Verfügung, um die Telefonanlage 90 an ein öffentliches Kommunikationsnetz anzubinden, so kann die Telefonanlage beispielsweise auch eine GSM-gestützte mobile Telefonanlage sein.

Das Überwachungsmittel 80 ist zu einer Videoüberwachung des gesamten Innenraums des Aufliegers 10 eingerichtet. Hierzu wird eine lokale Speicherung der Bilddaten vorgenommen, die dann nach Ende der Geschäftszeit der mobilen Geschäftsstelle über die Kommunikationsmittel 50 an einen entfernten Rechner 200 übertragen werden. Alternativ ist es auch möglich, die zwischengespeicherten Bilddaten nach Herstellung eines kabelgebundenen Datenkanals nach Abstellen der mobilen Geschäftsstelle 1 am seinem nächtlichen Abstellort zu einem externen Rechner 200 zu übertragen. Aber auch die permanente Anbindung der Videoüberwachung der mobilen Geschäftstelle 10 an einen externen Sicherheitsdienst ist bei Einsatz moderner Videokompressionsverfahren bereits bei einer Bandbreite von 128 kbit/s möglich.

Schließlich steht das Überwachungsmittel 80 vorzugsweise über das Kommunikationsmittel 50 in ständiger Verbindung mit einem Server eines privaten Sicherheitsdienstes und ist dazu eingerichtet, in einem Notfall automatische Notrufe sowohl über die Kommunikationsmittel 50 als auch über die Telefonanlage 90 abzusetzen.

### Bezugszeichen

- (1): Geschäftsstelle
- (6): Stütze
- (8): Doppelachse
- (10): Auflieger
- (11): Fenster
- (12): Kundenzugang
- (13): erste Glasschiebetür
- (14): Notausgang
- (16): Rampe
- (20): Kassen-/Schalterzone
- (22): Kassen-/Schalterarbeitsplatz
- (23): Arbeitsplatz
- (24): Bankingterminal
- (26): Kundenterminal
- (30): Sanitärzone
- (31): Glastür
- (32): Toilette
- (34): Waschbecken
- (40): Kundenberatungszone
- (41): zweite Glasschiebetür
- (43): Kühlvorrichtung
- (44): Küchenbereich
- (45): Spüle
- (46): Konferenzbereich
- (47): Sitzgelegenheit
- (48): Ablagefläche
- (49): Ablagefächer
- (50): Kommunikationsmittel
- (51): Satellitenantenne
- (52): Serverschrank
- (54): Technikschrank
- (60): Geldausgabeautomat
- (62): Sicherungstür
- (70): Kassentresor
- (80): Überwachungsmittel
- (90): Telefonanlage
- (100): Zugmaschine
- (200): Rechner
- (400): Barriere
- (500): Satellit
- (510): Satellitenhub

## Patentansprüche

1. Mobile Geschäftsstelle (1) für ein Finanzinstitut mit einem zumindest einachsigen Auflieger (10), der dazu vorgesehen ist, von einer Zugmaschine (100) gezogen zu werden, wobei
a. der Innenraum des Aufliegers (10) über einen Kundenzugang (12) zugänglich ist,
b. der Innenraum des Aufliegers (10) über einen separaten Notausgang (14) verlassen werden kann,
c. der Innenraum zumindest drei voneinander abgeteilte Zonen (20, 30, 40) aufweist, nämlich:
i. eine Kassen-/Schalterzone (20), in der zumindest ein mit einem Bankingterminal (24) ausgerüsteter Kassen-/Schalterarbeitsplatz (22) für Kundengespräche ausgebildet ist,
ii. eine Sanitärzone (30), in der zumindest eine für Kunden und Mitarbeiter der Geschäftsstelle zugängliche Toilette (32) ausgebildet ist , und
iii. eine Kundenberatungszone (40), in der Sitzgelegenheiten (47) für zwei Personen und eine Ablagefläche für Geschäftsunterlagen (48) ausgebildet sind, wobei die Kundenberatungszone (40) mittels einer Barriere (400) von der Kassen-/Schalterzone (20) und/oder der Sanitärzone (30) abgetrennt ist, die die Kundenberatungszone (40) gegen unautorisierten Zutritt aus der Kassen-/Schalterzone (20) und/oder aus der Sanitärzone (30) sichert.

2. Mobile Geschäftsstelle (1) gemäß Anspruch 1, **dadurch gekennzeichnet, dass** die Barriere (400) zumindest zum Teil transparent ausgebildet ist.

3. Mobile Geschäftsstelle (1) gemäß Anspruch 1, **dadurch gekennzeichnet, dass** die Geschäftstelle (1) weiterhin Kommunikationsmittel (50) zur Herstellung einer bidirektionalen satellitengestützten Datenkommunikation mit einem entfernten Rechner (200) umfasst.

4. Mobile Geschäftsstelle (1) gemäß Anspruch 1, **dadurch gekennzeichnet, dass** die Geschäftstelle (1) weiterhin einen Geldausgabeautomaten (60) umfasst.

5. Mobile Geschäftstelle (1) gemäß Anspruch 1, **dadurch gekennzeichnet, dass** die Geschäftstelle (1) weiterhin einen automatischen Kassentresor (70) umfasst.

6. Mobile Geschäftsstelle (1) gemäß Anspruch 1, **dadurch gekennzeichnet, dass** die Geschäftstelle (1) weiterhin Überwachungsmittel (80) zur Feststellung eines unautorisierten Zugriffs auf den Innenraum des Aufliegers (10) umfasst.

7. Mobile Geschäftstelle (1) gemäß Anspruch 1, **dadurch gekennzeichnet, dass** die Geschäftstelle (1) weiterhin eine Telefonanlage (80) umfasst, die zumindest für externe Telefonate eingerichtet ist.

8. Mobile Geschäftstelle (1) gemäß Anspruch 3, 4, 5, 6 oder 7, **dadurch gekennzeichnet, dass**
a. das Bankingterminal (24),
b. der Geldausgabeautomat (60),
c. der automatische Kassentresor (70),
d. die Überwachungsmittel (80), oder
e. die Telefonanlage (90)
unter Verwendung der Kommunikationsmittel (50) in Datenkommunikation mit einem entfernten Rechner (200) stehen.

9. Mobile Geschäftsstelle (1) gemäß Anspruch 4, **dadurch gekennzeichnet, dass** der Geldausgabeautomat (60)
a. von Außen zugänglich am Auflieger (10) angeordnet ist, und
b. auf Straßenniveau absenkbar auf dem Auflieger (10) gelagert ist.

10. Mobile Geschäftsstelle (1) gemäß Anspruch 1, **dadurch gekennzeichnet, dass** der Auflieger (10) absenkbar ausgebildet ist.

11. Mobile Geschäftstelle (1) gemäß Anspruch 1, **dadurch gekennzeichnet, dass** in der Kundenberatungszone (40) ein Küchenbereich (44) ausgebildet ist.

12. Mobile Geschäftstelle (1) gemäß Anspruch 1, **dadurch gekennzeichnet, dass** der Auflieger (10) in Sandwichbauweise aufgebaut ist.

## Claims

1. A mobile branch office (1) for a financial establishment with an at least single-axis semi-trailer (10) intended to be pulled by a tractor unit (100),
a. the entry to the interior of said semi-trailer (10) being through a client access (12),
b. the exit from the interior of said semi-trailer (10) being through a separate emergency exit (14),
c. said interior comprising at least three partitioned zones (20, 30, 40), namely:
i. one cashier/counter zone (20) in which there is formed at least one cashier/counter workplace (22) for customer service equipped with a banking terminal (24),
ii. one sanitary zone (30) in which there is formed at least one toilet (32) accessible for customers and staff of the branch office, and
iii. one customer advisory service zone (40) in which there are formed seating possibilities (47) for two persons and a surface for depositing documents (48), said customer advisory service zone (40) being separated from said cashier/counter zone (20) and/or from said sanitary zone (30) by means of a barrier (400) securing said customer advisory service zone (40) against unauthorized access from said cashier/counter zone (20) and/or said sanitary zone (30).

2. The mobile branch office (1) as set forth in claim 1, **characterized in that** the barrier (400) is configured to be at least partially transparent.

3. The mobile branch office (1) as set forth in claim 1, **characterized in that** said mobile branch office (1) includes further communication means (50) for establishing a bidirectional satellite-assisted data communication with a remote computer (200).

4. The mobile branch office (1) as set forth in claim 1, **characterized in that** said mobile branch office (1) further includes a cash dispenser (60).

5. The mobile branch office (1) as set forth in claim 1, **characterized in that** said mobile branch office (1) further includes an automatic cashier safe (70).

6. The mobile branch office (1) as set forth in claim 1, **characterized in that** said mobile branch office (1) further includes monitoring means (80) for detecting unauthorized access to the interior of the semi-trailer (10).

7. The mobile branch office (1) as set forth in claim 1, **characterized in that** said mobile branch office (1) further includes a telephone system (90) devised for external calls at least.

8. The mobile branch office (1) as set forth in claim 3, 4, 5, 6 or 7, **characterized in that**
a. the banking terminal (24),
b. the cash dispenser (60),
c. the automatic cashier safe (70),
d. the monitoring means (30), or
e. the telephone system (90)
are in data communication with a remote computer (200), using the communication means (50).

9. The mobile branch office (1) as set forth in claim 4, **characterized in that** the cash dispenser (60)
a. is disposed on the semi-trailer (10) so as to be accessible from the outside and
b. is mounted on said semi-trailer (10) so that it can be lowered to street level.

10. The mobile branch office (1) as set forth in claim 1, **characterized in that** the semi-trailer (10) is configured to be lowerable.

11. The mobile branch office (1) as set forth in claim 1, **characterized in that** a kitchen area (44) is configured in the customer advisory service zone (40).

12. The mobile branch office (1) as set forth in claim 1, **characterized in that** said the semi-trailer (10) has a sandwich construction.

## Revendications

1. Agence mobile (1) pour établissement financier avec une semi-remorque (10) à au moins un axe prévue pour être tirée par un véhicule tracteur (100),
a. l'entrée à l'intérieur de la semi-remorque (10) se faisant par une entrée clients (12),
b. la sortie de l'intérieur de la semi-remorque (10) se faisant par une sortie de secours (14) séparée,
c. l'intérieur comportant au moins trois zones (20, 30, 40) séparées l'une de l'autre par des cloisons, à savoir :
i. une zone caisse/guichet (20) dans laquelle est formée au moins une place de travail caisse/guichet (22) équipée d'un terminal bancaire (24) pour les entretiens clients,
ii. une zone sanitaire (30) dans laquelle est formée au moins une toilette (32) accessible aux clients et aux employés de l'agence, et
iii. une zone orientation clients (40) dans laquelle sont formés des sièges (47) pour deux personnes et une surface permettant d'y déposer des documents (48), la zone orientation clients (40) étant séparée de la zone caisse/guichet (20) et/ou de la zone sanitaire (30) par une barrière (400) qui interdit l'accès non autorisé à la zone orientation clients (40) depuis la zone caisse/guichet (20) et/ou la zone sanitaire (30).

2. Agence mobile (1) selon la revendication 1, **caractérisée en ce que** la barrière (400) est conformée pour être du moins partiellement transparente.

3. Agence mobile (1) selon la revendication 1, **caractérisée en ce que** l'agence mobile (1) comprend par ailleurs des moyens de communication (50) destinés à établir une communication bidirectionnelle de données, assistée par satellite, avec un ordinateur (200) situé à distance.

4. Agence mobile (1) selon la revendication 1, **caractérisée en ce que** l'agence mobile (1) comprend par ailleurs une billetterie (60).

5. Agence mobile (1) selon la revendication 1, **caractérisée en ce que** l'agence mobile (1) comprend par ailleurs un coffre-fort de caisse automatique (70).

6. Agence mobile (1) selon la revendication 1, **caractérisée en ce que** l'agence mobile (1) comprend par ailleurs des moyens de surveillance (80) pour détecter l'accès non autorisé à l'intérieur de la semi-remorque (10).

7. Agence mobile (1) selon la revendication 1, **caractérisée en ce que** l'agence mobile (1) comprend par ailleurs une installation téléphonique (90) conçue au moins pour des appels à l'extérieur.

8. Agence mobile (1) selon la revendication 3, 4, 5, 6 ou 7, **caractérisée en ce que**
a. le terminal bancaire (24),
b. la billetterie (60),
c. le coffre-fort de caisse automatique (70),
d. les moyens de surveillance (30) ou
e. l'installation téléphonique (90)
sont en communication de données avec un ordinateur (200) situé à distance moyennant des moyens de communication (50).

9. Agence mobile (1) selon la revendication 4, **caractérisée en ce que** la billetterie (60)
a. est disposée sur la semi-remorque (10) de manière à être accessible depuis l'extérieur et
b. est montée sur la semi-remorque (10) de manière à être abaissable au niveau de la route.

10. Agence mobile (1) selon la revendication 1, **caractérisée en ce que** la semi-remorque (10) est conformée pour être abaissable.

11. Agence mobile (1) selon la revendication 1, **caractérisée en ce qu'**un coin cuisine (44) est formé dans la zone orientation clients (40).

12. Agence mobile (1) selon la revendication 1, **caractérisée en ce que** la semi-remorque (10) est réalisée en sandwich.
